# EUROPEAN PATENT APPLICATION

(11) **EP 4 647 525 A1**
(43) Date of publication of application: **12.11.2025**
(21) Application number: 24778710.4
(22) Date of filing: 07.02.2024
(51) Int. Cl.: C22C 38/00, C21D 9/00, C22C 38/58, F16B 35/00

(54) **STEEL BAR, BOLT, AND METHOD FOR PRODUCING BOLT**

(30) Priority: 30.03.2023 JP 2023056176
(71) Applicant: JFE Steel Corporation, Tokyo 100-0011 (JP)
(72) Inventor: IHARA Naoya, Tokyo 100-0011 (JP); NAKASHIMA Koichi, Tokyo 100-0011 (JP)
(74) Representative: Haseltine Lake Kempner LLP
(86) International application number: PCT/JP2024/004198
(87) International publication number: WO 2024/202565

(57) **Abstract**

A steel bar suitable as material for large-diameter, high-strength, and high-toughness bolts is provided, along with a large-diameter, high-strength, and high-toughness bolt and a method of producing the bolt. A steel bar (1) has a chemical composition containing, in mass%, C: 0.35 % or more and 0.45 % or less, Si: 0.10 % or more and 0.50 % or less, Mn: 0.50 % or more and 2.00 % or less, P: 0.030 % or less, S: 0.030 % or less, Ni: 1.00 % or more and 3.00 % or less, Cr: 0.50 % or more and 2.00 % or less, and Mo: 0.10 % or more and 0.50 % or less, with the balance being Fe and impurities, a DI value being 420 or more, and a diameter being 65 mm or more.

## Description

### TECHNICAL FIELD

The present disclosure relates to a steel bar, a bolt, and a method of producing a bolt.

### BACKGROUND

Patent literature (PTL) 1 discloses a method of producing large-diameter bolts. In this production method, a steel wire rod contains, by weight%, C: 0.28 % to 0.38 %, Si: 0.10 % or less, Mn: 0.60 % to 1.20 %, and Cr: 0.20 % to 0.60 %, with the balance being iron and impurities and having a value calculated by a predetermined formula satisfying 30 to 45, and an M25 to M40 bolt is formed from the steel wire rod by cold forging, then heated and subjected to water quenching and tempering. In this production method, when producing bolts of M25 to M40, it is possible to perform direct cold forging without the need for softening annealing. It is also claimed that bolts can be produced inexpensively with sufficient hardenability, without causing cracks during bolt processing, and with a tensile strength of 75 kgf/mm² or more after quenching and tempering.

### CITATION LIST

### Patent Literature

PTL 1: JP H02-166231 A

### SUMMARY

### (Technical Problem)

As disclosed in PTL 1, the bolt is subjected to quenching and tempering during production to achieve the desired strength. However, as the bolt increases in size, it becomes difficult to obtain a quenched microstructure inside the bolt. In the bolt described in PTL 1, the diameter is at most 40 mm (M40), as mentioned above. In addition, bolts are also required to have high toughness. Therefore, demand exists for a steel bar suitable as material for large-diameter, high-strength, and high-toughness bolts, and for large-diameter, high-strength, and high-toughness bolts and a method of producing such bolts.

The present disclosure has been conceived in light of such circumstances, and it is an aim thereof to provide a steel bar suitable as material for large-diameter, high-strength, and high-toughness bolts, and to provide a large-diameter, high-strength, and high-toughness bolt and a method of producing the bolt.

### (Solution to Problem)

The steel bar, bolt, and method of producing a bolt according to the present disclosure for achieving the aforementioned aim are as follows.
1. A steel bar comprising a chemical composition containing (consisting of), in mass%,
   C: 0.35 % or more and 0.45 % or less,
   Si: 0.10 % or more and 0.50 % or less,
   Mn: 0.50 % or more and 2.00 % or less,
   P: 0.030 % or less,
   S: 0.030 % or less,
   Ni: 1.00 % or more and 3.00 % or less,
   Cr: 0.50 % or more and 2.00 % or less, and
   Mo: 0.10 % or more and 0.50 % or less,
   with the balance being Fe and impurities, wherein
   a DI value expressed by Expression 1 is 420 or more, and
   the steel bar has a diameter of 65 mm or more, DI = (-23.7 × [C]2 + 38.3 × [C] + 3.54) × (1 + 3.3 × [Mn]) × (1 + 0.7 × [Si]) × (1 + 2.16 × [Cr]) × (1 + 3 × [Mo]) × (1 + 0.36 × [Ni]) (1)
   where [C], [Mn], [Si], [Cr], [Mo], and [Ni] represent a content of C, Mn, Si, Cr, Mo, and Ni, respectively, in mass%.
2. A bolt using the steel bar according to 1, wherein
   the bolt comprises a shaft,
   the shaft has a prior y grain size, in a cross-section perpendicular to a longitudinal direction, with a grain size number of 4 or more and 10 or less, and
   in a microstructure of the cross-section, an area ratio of tempered martensite is 80 % or more.
3. A method of producing a bolt having a shaft and a bolt head by cutting the steel bar according to 1 and subjecting the steel bar after cutting to hot forging, thread rolling, quenching, and tempering, the method comprising:
   forming the bolt head in the hot forging;
   forming threads of the shaft in the thread rolling; and
   setting, in the quenching, a heating temperature to be 820 °C or more and 1150 °C or less and an average cooling rate from 800 °C to 300 °C to be 0.5 °C/s or more.

### (Advantageous Effect)

According to the present disclosure, it is possible to provide a steel bar suitable as material for large-diameter, high-strength, and high-toughness bolts, and to provide a large-diameter, high-strength, and high-toughness bolt and a method of producing the bolt.

### BRIEF DESCRIPTION OF THE DRAWINGS

In the accompanying drawings:
FIG. 1 is a diagram illustrating an example of a steel bar according to the present embodiment;
FIG. 2 is a diagram illustrating an example of a bolt according to the present embodiment;
FIG. 3 is a flowchart illustrating an example of a bolt production process for producing a bolt; and
FIG. 4 is a flowchart illustrating an example of a bolt production process for producing a bolt.

### DETAILED DESCRIPTION

First, an overview of the steel bar, bolt, and the method of producing a bolt according to the present embodiment is provided.

The steel bar according to the present embodiment includes
a chemical composition containing, in mass%,
C: 0.35 % or more and 0.45 % or less,
Si: 0.10 % or more and 0.50 % or less,
Mn: 0.50 % or more and 2.00 % or less,
P: 0.030 % or less,
S: 0.030 % or less,
Ni: 1.00 % or more and 3.00 % or less,
Cr: 0.50 % or more and 2.00 % or less, and
Mo: 0.10 % or more and 0.50 % or less,
the balance being Fe and impurities.

The steel bar according to the present embodiment also has a DI value expressed by the following Expression (1) of 420 or more. In the following Expression (1), [C], [Mn], [Si], [Cr], [Mo], and [Ni] represent the content of C, Mn, Si, Cr, Mo, and Ni, respectively, in mass%. The steel bar has a diameter of 65 mm or more. DI = (-23.7 × [C]2 + 38.3 × [C] + 3.54) × (1 + 3.3 × [Mn]) × (1 + 0.7 × [Si]) × (1 + 2.16 × [Cr]) × (1 + 3 × [Mo]) × (1 + 0.36 × [Ni]) (1)

The steel bar is suitable as a material for producing large-diameter bolts. The bolt according to the present embodiment is produced using the above steel bar and has a shaft. In a cross-section perpendicular to a longitudinal direction, the prior y grain size of the shaft is a grain size number of 4 or more and 10 or less, and in a microstructure of the cross-section, the area ratio of tempered martensite is 80 % or more. An example of the method of producing this bolt is a method of producing a bolt having a bolt head and a shaft by subjecting the above steel bar to hot forging to form the bolt head, thread rolling to form threads of a shaft, quenching, and tempering. In the quenching, the heating temperature is set to be 820 °C or more and 1150 °C or less and the average cooling rate from 800 °C to 300 °C is set to be 0.5 °C/s or more.

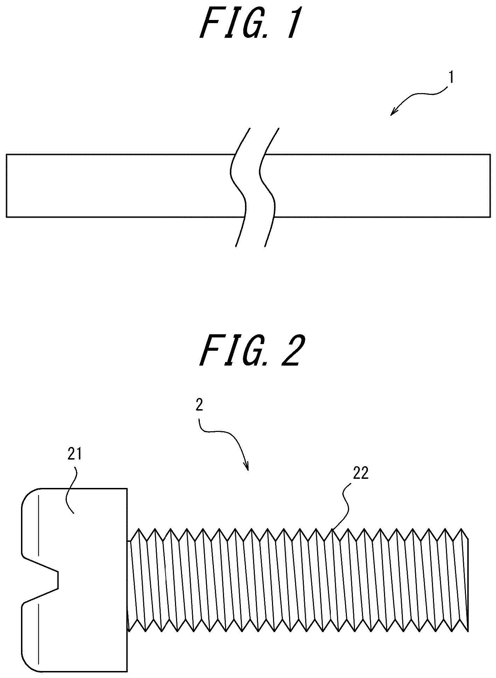

FIG. 1 illustrates the steel bar 1 as an example of the steel bar according to the present embodiment. FIG. 2 illustrates a bolt 2, having a bolt head 21 and a shaft 22 on which threads are formed, as an example of a bolt according to the present embodiment. The bolt 2 can be shaped as illustrated in the drawing by cutting the steel bar 1 to a predetermined length, then forming the bolt head 21 at one end by hot forging, and forming threads on the shaft 22 at the other end by rolling. In FIG. 2, threads are formed over the entire shaft 22, but in the present embodiment, it suffices for the threads to be formed on at least a part of the shaft.

The steel bar is described below in detail. In the following description, "%" indicates "mass%" unless otherwise specified.

The steel bar according to the present embodiment is bar-shaped steel. The steel bar can, for example, be cylindrical steel from the perspective of being suitable as a material for bolts.

The steel bar according to the present disclosure has a diameter of 65 mm or more from the perspective of being suitable as material for large-diameter bolts. On the other hand, while no upper limit is placed on the diameter, the diameter is preferably 100 mm or less.

As described above, the steel bar according to the present embodiment has a chemical composition containing C (carbon), Si (silicon), Mn (manganese), P (phosphorus), S (sulfur), Ni (nickel), Cr (chromium), and Mo (molybdenum), with the balance being Fe (iron) and impurities. Impurities refer to elements whose content is allowed within a range that does not impair the effects of the present disclosure. The impurities include so-called inevitable impurities that are inevitably mixed in from ore and scrap as raw materials, from the production environment, or the like during the industrial production of the steel bar.

Hereinafter, the chemical composition of the steel bar (the content of each element in the steel bar) will be described in detail.

The C content is 0.35 % or more and 0.45 % or less. C is an element that affects the hardenability and tensile strength of the steel bar. If the C content is less than 0.35 %, the tensile strength of the steel bar is insufficient. Therefore, the C content is 0.35 % or more. The C content is preferably 0.38 % or more. On the other hand, if the C content exceeds 0.45 %, the toughness of the steel bar decreases. Therefore, the C content is 0.45 % or less. The C content is preferably 0.43 % or less.

The Si content is 0.10 % or more and 0.50 % or less. Si is an element that affects the hardenability and temper softening resistance of the steel bar. If the Si content is less than 0.10 %, hardenability is insufficient, and the tensile strength of the steel bar decreases. Therefore, the Si content is 0.10 % or more. The Si content is preferably 0.15 % or more. On the other hand, if the Si content exceeds 0.50 %, the temper softening resistance increases, and the toughness of the steel bar decreases. Therefore, the Si content is 0.50 % or less. The Si content is preferably 0.35 % or less.

The Mn content is 0.50 % or more and 2.00 % or less. Mn is an element that affects the hardenability and martensite transformation temperature of the steel bar. If the Mn content is less than 0.50 %, hardenability is insufficient, and the tensile strength of the steel bar decreases. Therefore, the Mn content is 0.50 % or more. The Mn content is preferably 0.70 % or more. On the other hand, if the Mn content exceeds 2.00 %, the martensite transformation temperature decreases, retained austenite is more likely to occur, and the tensile strength of the steel bar is insufficient. Therefore, the Mn content is 2.00 % or less. The Mn content is preferably 1.00 % or less.

The P content is 0.030 % or less. P is an element that segregates at grain boundaries and affects the toughness of the steel bar. If the P content exceeds 0.030 %, the grain boundary strength decreases, leading to a reduction in the toughness of the steel bar. Therefore, the P content is 0.030 % or less. The P content is preferably 0.020 % or less. On the other hand, since the presence of P is usually unavoidable, excessive reduction of P may lead to an increase in refining time and refining costs. The P content is therefore preferably 0.003 mass% or more. The P content is more preferably 0.007 mass% or more.

The S content is 0.030 % or less. S is an element that affects the tensile strength and toughness of the steel bar by combining with Mn to form MnS. MnS serves as an initiation point for fracture in the steel microstructure. If the S content exceeds 0.030 %, the toughness of the steel bar decreases. Therefore, the S content is 0.030 % or less. The Si content is preferably 0.015 % or less. On the other hand, since the presence of S is usually unavoidable, excessive reduction of S may increase refining costs. The S content is therefore preferably 0.003 mass% or more. The S content is more preferably 0.007 mass% or more.

The Ni content is 1.00 % or more and 3.00 % or less. Ni is an element that affects the hardenability and toughness of the steel bar. If the Ni content is less than 1.00 %, the hardenability and toughness decrease. Therefore, the Ni content is 1.00 % or more. The Ni content is preferably 1.50 % or more. On the other hand, if the Ni content exceeds 3.00 %, the effects of improving hardenability and toughness become saturated, leading to high costs. Therefore, the Ni content is 3.00 % or less. The Ni content is preferably 2.00 % or less.

The Cr content is 0.50 % or more and 2.00 % or less. Cr is an element that affects the hardenability and martensite transformation temperature of the steel bar. If the Cr content is less than 0.50 %, hardenability is insufficient, and the tensile strength decreases. Therefore, the Cr content is 0.50 % or more. The Cr content is preferably 0.70 % or more. On the other hand, if the Cr content exceeds 2.00 %, the effect of improving hardenability becomes saturated, leading to high costs. Therefore, the Cr content is 2.00 % or less. The Cr content is preferably 1.00 % or less.

The Mo content is 0.10 % or more and 0.50 % or less. Mo is an element that affects the hardenability and temper softening resistance of the steel bar. If the Mo content is less than 0.10 %, hardenability is insufficient, and the tensile strength decreases. Therefore, the Mo content is 0.10 % or more. On the other hand, if the Mo content exceeds 0.50 %, the effect of improving hardenability becomes saturated. Therefore, the Mo content is 0.50 % or less.

The DI value expressed by Expression (1) above serves as a standard for hardenability. If the DI value is low, the hardenability is insufficient. Therefore, the DI value is set to 420 or more. The DI value is preferably set to 450. The DI value is more preferably set to 500. On the other hand, while no upper limit is placed on the DI value, the DI value may, for example, be 8000 or less.

The bolt according to the present embodiment is described in detail below.

The bolt according to the present embodiment is made using the above-described steel bar. The bolt has a shaft. The outer diameter of the shaft corresponds to the diameter of the steel bar used as the material. Therefore, the outer diameter of the shaft can be 65 mm or more. The outer diameter of the shaft is preferably 100 mm or less.

Next, the microstructure of the shaft of the bolt is described. The microstructure of the shaft of the bolt described below is the structure observed in a cross-section perpendicular to the longitudinal direction of the shaft.

In the microstructure, the prior y grain size (also referred to as prior austenite grain size) is a grain size number of 4 or more and 10 or less. The grain size number in the present embodiment is based on the provisions of JIS G 0551 "Steels-Micrographic determination of the apparent grain size" and is measured at a position that is a distance d/4 outward from the radial center of the shaft. Here, d refers to the outer diameter of the shaft. In greater detail, measurement is made by the method described in the EXAMPLES section.

The prior y grain size affects the toughness of the steel bar. If the prior y grain size is less than grain size number 4, the toughness of the bolt decreases. Therefore, the prior y grain size is grain size number 4 or more. The prior y grain size is preferably grain size number 6 or more. On the other hand, if the prior y grain size exceeds grain size number 10, the tensile strength decreases. Therefore, the prior y grain size is grain size number 10 or less. The prior y grain size is preferably grain size number 9 or less.

Next, the area ratio of tempered martensite in the microstructure of the cross-section is described. The area ratio of tempered martensite is measured at the radial center of the shaft. In greater detail, measurement is made by the method described in the EXAMPLES section.

The area ratio of tempered martensite affects the tensile strength and toughness of the bolt. If the area ratio of tempered martensite is small, the tensile strength and toughness of the bolt decrease. Therefore, the area ratio of tempered martensite is 80 % or more. The area ratio of tempered martensite is preferably 85 % or more. On the other hand, no upper limit is placed on the area ratio of tempered martensite, and the area ratio may be 100 %, i.e., the microstructure may consist entirely of tempered martensite. The microstructure other than tempered martensite is not limited and can be formed by one or more structures selected from the group consisting of ferrite, pearlite, bainite, and retained austenite.

By improving the tensile strength of the shaft, a bolt suitable for use can be obtained. Therefore, the tensile strength of the shaft is preferably 1040 MPa or more. The tensile strength of the shaft is measured at a position that is a distance d/4 outward from the radial center, based on JIS Z 2241. In greater detail, measurement is made by the method described in the EXAMPLES section.

By improving the toughness of the shaft, a bolt suitable for use can be obtained. Therefore, the Charpy absorbed energy of the shaft is preferably 27 J or more. The Charpy absorbed energy of the shaft is measured at a position that is a distance d/4 from the radial center according to the Charpy impact test specified in JIS Z 2242. In greater detail, measurement is made by the method described in the EXAMPLES section.

A method of producing the bolt is described below in detail.

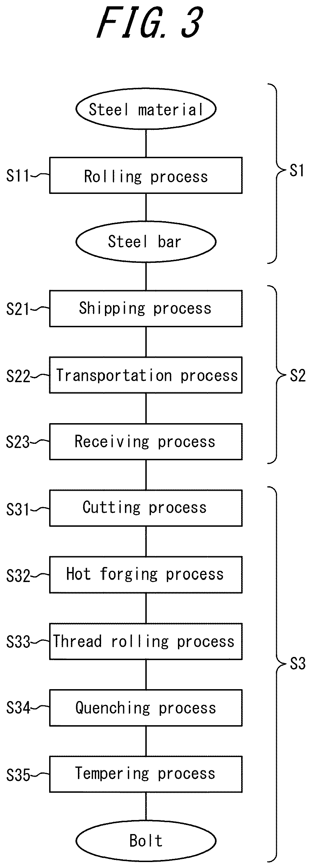

FIG. 3 illustrates an example of the flow of the bolt production process to produce a bolt. In the bolt production process, steel material is used to produce the steel bar and bolt according to the present embodiment.

The bolt production process includes a steel bar production process S1 for using steel material to produce steel bars used as the material for bolts, and a bolt forming process S3 for processing the steel bars produced in the steel bar production process S1 into bolts. This bolt production process may include an intermediate process S2 for transporting the steel bars from the workshop or facility where the steel bar production process S1 is performed to the workshop or facility where the bolt forming process S3 is performed.

In the steel bar production process S1, steel material having the aforementioned chemical composition and DI value is subjected to hot rolling or hot forging (rolling process S11) to produce steel bars of a predetermined diameter (for example, steel bars with a diameter of 65 mm or more). As the steel material, for example, a bloom cast by continuous casting or a steel ingot cast by ingot casting can be used. The steel bars undergo a predetermined quality inspection as necessary.

In the intermediate process S2, the steel bars are shipped (shipping process S21) and transported (transportation process S22) to the workshop or facility where the bolt forming process S3 is performed, and the steel bars are received at the workshop or facility where the bolt forming process S3 is performed (receiving process S23).

In the bolt forming process S3, the received steel bars are cut to predetermined dimensions (cutting process S31). The cut steel bars are then subjected to hot forging to form the head of a bolt (hot forging process S32), threads are formed by rolling (thread rolling process S33), and the result is then subjected to quenching (quenching process S34) and tempering (tempering process S35) to obtain the bolts as products.

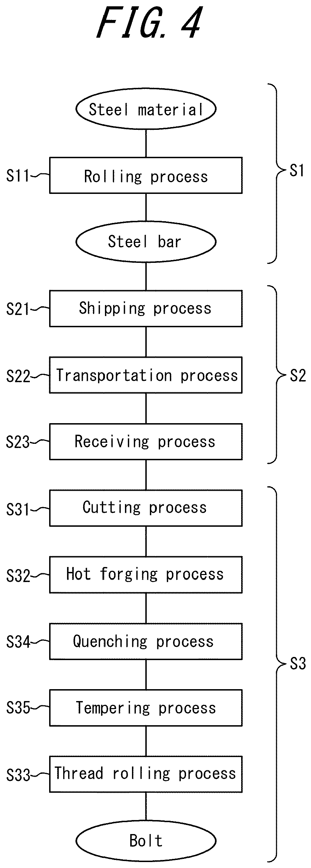

FIG. 4 illustrates another example of the flow of the process for producing bolts. As illustrated in FIG. 4, in the bolt forming process S3, rolling (thread rolling process S33) may be performed after quenching (quenching process S34) and tempering (tempering process S35).

After the bolt forming process S3, a coating treatment such as painting or plating may be performed on the bolts.

The quenching (quenching process S34) and tempering (tempering process S35) are described below in detail. The process conditions for obtaining the desired tensile strength and toughness of the bolts are explained. In the following description of the processes, the temperature of the steel shaped into bolts is indicated as the temperature at the radial center of the shaft.

The quenching in the quenching process S34 is performed at a heating temperature of 820 °C or more and 1150 °C or less, and at an average cooling rate from 800 °C to 300 °C of 0.5 °C/s or more. If the heating temperature is less than 820 °C, the microstructure of the shaft cannot be austenite single phase. Therefore, the heating temperature is 820 °C or more. On the other hand, an excessively high heating temperature leads to coarsening of the crystal grains, resulting in reduced toughness. The heating temperature is therefore 1150 °C or less. The heating temperature is preferably 900 °C or less.

By setting the cooling rate to an average cooling rate of 0.5 °C/s or more from 800 °C to 300 °C, the transformation to microstructures other than martensite, such as ferrite and pearlite, is suppressed. If the average cooling rate is slow, the desired microstructure cannot be obtained. Therefore, the average cooling rate from 800 °C to 300 °C is set to 0.5 °C/s or more. Moreover, by setting the cooling stop temperature to 150 °C or less, the martensitic transformation can be promoted. Therefore, the cooling stop temperature is preferably 150 °C or less.

In the tempering process S35, it is preferable to heat to 500 °C or more and hold for 30 minutes or more. That is, the holding temperature is preferably 500 °C or more. The holding time is preferably 30 minutes or more. After holding, it is preferable to cool to room temperature. During this cooling, it is desirable to increase the cooling rate as much as possible to avoid embrittlement due to P grain boundary segregation.

### EXAMPLES

Examples of the present disclosure are described below. In the following examples, in order to evaluate the relationship between the properties of a steel bar and the properties of a bolt produced from the steel bar, a sample simulating the shaft of the bolt was created by quenching and tempering the steel bar without forming threads or the bolt head, and evaluations were conducted using the sample.

Molten steels (Steel Nos. A to V) with the compositions (the balance being Fe and impurities) and the DI values listed in Table 1 were cast into continuous-cast steel with a cross-section of 300 mm × 400 mm using a continuous casting machine. In Table 1, underlining indicates that the underlined value is outside the range of the composition or DI value defined in the present embodiment.

### [Table 1]

**Table 1**

| Steel No. | C (wt%) | Si (wt%) | Mn (wt%) | P (wt%) | S (wt%) | Ni (wt%) | Cr (wt%) | Mo (wt%) | DI value | Notes |
|---|---|---|---|---|---|---|---|---|---|---|
| A | 0.38 | 0.20 | 1.01 | 0.020 | 0.010 | 1.50 | 1.33 | 0.25 | 756 | Conforming steel |
| B | 0.35 | 0.15 | 0.88 | 0.015 | 0.010 | 1.88 | 1.28 | 0.30 | 727 | Conforming steel |
| C | 0.44 | 0.25 | 0.93 | 0.015 | 0.009 | 1.80 | 1.32 | 0.28 | 882 | Conforming steel |
| D | 0.43 | 0.48 | 1.95 | 0.025 | 0.010 | 2.87 | 1.97 | 0.48 | 4047 | Conforming steel |
| E | 0.35 | 0.11 | 0.87 | 0.007 | 0.008 | 1.05 | 0.54 | 0.48 | 426 | Conforming steel |
| F | 0.36 | 0.12 | 0.57 | 0.007 | 0.009 | 1.08 | 1.97 | 0.12 | 442 | Conforming steel |
| G | 0.35 | 0.49 | 1.49 | 0.008 | 0.008 | 1.05 | 0.51 | 0.11 | 430 | Conforming steel |
| H | 0.39 | 0.24 | 0.78 | 0.015 | 0.029 | 1.66 | 0.79 | 0.25 | 470 | Conforming steel |
| I | 0.41 | 0.26 | 0.75 | 0.028 | 0.007 | 1.77 | 0.84 | 0.31 | 557 | Conforming steel |
| J | 0.39 | 0.21 | 0.71 | 0.006 | 0.007 | 1.63 | 0.69 | 0.17 | 340 | Comparative steel |
| K | 0.47 | 0.20 | 1.03 | 0.013 | 0.008 | 1.60 | 0.75 | 0.30 | 642 | Comparative steel |
| L | 0.33 | 0.21 | 1.02 | 0.012 | 0.008 | 1.61 | 0.75 | 0.31 | 544 | Comparative steel |
| M | 0.38 | 0.52 | 1.01 | 0.012 | 0.008 | 1.59 | 0.72 | 0.31 | 672 | Comparative steel |
| N | 0.36 | 0.08 | 1.01 | 0.013 | 0.007 | 1.60 | 0.73 | 0.22 | 440 | Comparative steel |
| O | 0.37 | 0.20 | 2.05 | 0.012 | 0.007 | 1.62 | 0.73 | 0.29 | 977 | Comparative steel |
| P | 0.38 | 0.21 | 0.47 | 0.011 | 0.008 | 1.61 | 0.72 | 0.31 | 334 | Comparative steel |
| Q | 0.39 | 0.25 | 1.02 | 0.031 | 0.008 | 1.61 | 0.73 | 0.30 | 590 | Comparative steel |
| R | 0.38 | 0.25 | 1.01 | 0.010 | 0.032 | 1.60 | 0.73 | 0.30 | 576 | Comparative steel |
| S | 0.38 | 0.25 | 1.00 | 0.011 | 0.008 | 0.95 | 0.72 | 0.31 | 491 | Comparative steel |
| T | 0.37 | 0.25 | 1.01 | 0.012 | 0.008 | 1.65 | 0.48 | 0.31 | 462 | Comparative steel |
| U | 0.38 | 0.24 | 1.02 | 0.011 | 0.007 | 1.63 | 0.85 | 0.09 | 428 | Comparative steel |
| V | 0.38 | 0.24 | 0.89 | 0.011 | 0.007 | 1.64 | 0.80 | 0.14 | 416 | Comparative steel |

Next, the continuous-cast steel was subjected to soaking at 1250 °C for 30 minutes and hot rolled into a billet having a rectangular cross-section with sides of 140 mm. Furthermore, each billet was hot rolled to have the diameter illustrated in Table 2, resulting in steel bar Nos. 1 to 30 (material as hot rolled). Here, the billets other than Steel No. J were formed into steel bars with diameters ranging from 65 mm to 100 mm by this hot rolling. The billet of Steel No. J was formed into a steel bar with a diameter of 40 mm by this hot rolling. The steel bars from Nos. 1 to 30 are cylindrical.

### [Table 2]

**Table 2**

| Steel bar No. | Steel bar | | Notes |
|---|---|---|---|
| | Steel No. | Diameter (mm) | |
| 1 | A | 65 | Example |
| 2 | A | 70 | Example |
| 3 | A | 75 | Example |
| 4 | A | 80 | Example |
| 5 | A | 100 | Example |
| 6 | A | 70 | Example |
| 7 | B | 70 | Example |
| 8 | C | 70 | Example |
| 9 | D | 70 | Example |
| 10 | E | 70 | Example |
| 11 | F | 70 | Example |
| 12 | G | 70 | Example |
| 13 | H | 70 | Example |
| 14 | I | 70 | Example |
| 15 | J | 40 | Reference Example |
| 16 | A | 70 | Example |
| 17 | A | 70 | Example |
| 18 | A | 70 | Example |
| 19 | K | 70 | Comparative Example |
| 20 | L | 70 | Comparative Example |
| 21 | M | 70 | Comparative Example |
| 22 | N | 70 | Comparative Example |
| 23 | O | 70 | Comparative Example |
| 24 | P | 70 | Comparative Example |
| 25 | Q | 70 | Comparative Example |
| 26 | R | 70 | Comparative Example |
| 27 | S | 70 | Comparative Example |
| 28 | T | 70 | Comparative Example |
| 29 | U | 70 | Comparative Example |
| 30 | V | 70 | Comparative Example |

Next, the above steel bars as hot rolled were subjected to quenching with the heating temperatures, cooling methods, and average cooling rates illustrated in Table 3. The item "heating temperature" in Table 3 refers to the temperature during heating for quenching. The "cooling method" refers to the method of cooling performed after heating for quenching, and the "average cooling rate" indicates the average cooling rate from 800 °C to 300 °C. In Table 3, underlining indicates that the underlined value is outside the range of the set of conditions for the production method defined in the present embodiment.

### [Table 3]

**Table 3**

| Product No. | Steel bar | Quenching conditions | | | Microstructure | | | Evaluation results | | Notes |
|---|---|---|---|---|---|---|---|---|---|---|
| | Steel bar No. | Heating temperature (°C) | Cooling method | Average cooling rate (°C/s) | Area ratio of Tempered martensite (%) | Microstructure other than tempered martensite | Prior γ grain size | Tensile strength (MPa) | Absorption energy (J) | |
| 1 | 1 | 845 | oil quenching | 3.1 | 100 | - | 8 | 1105 | 68 | Example |
| 2 | 2 | 845 | oil quenching | 2.7 | 100 | - | 8 | 1112 | 72 | Example |
| 3 | 3 | 845 | oil quenching | 2.6 | 96 | bainite | 8 | 1082 | 76 | Example |
| 4 | 4 | 845 | oil quenching | 2.5 | 95 | bainite | 8 | 1043 | 65 | Example |
| 5 | 5 | 845 | oil quenching | 1.5 | 81 | bainite | 8 | 1041 | 63 | Example |
| 6 | 6 | 845 | water cooling | 9.2 | 100 | - | 8 | 1195 | 70 | Example |
| 7 | 7 | 845 | oil quenching | 2.7 | 100 | - | 8 | 1073 | 78 | Example |
| 8 | 8 | 845 | oil quenching | 2.7 | 100 | - | 8 | 1168 | 60 | Example |
| 9 | 9 | 845 | oil quenching | 2.7 | 100 | - | 8 | 1201 | 58 | Example |
| 10 | 10 | 845 | oil quenching | 2.7 | 82 | bainite | 8 | 1040 | 71 | Example |
| 11 | 11 | 845 | oil quenching | 2.7 | 83 | bainite | 8 | 1047 | 73 | Example |
| 12 | 12 | 845 | oil quenching | 2.7 | 81 | bainite | 8 | 1053 | 75 | Example |
| 13 | 13 | 845 | oil quenching | 2.7 | 90 | bainite | 8 | 1073 | 71 | Example |
| 14 | 14 | 845 | oil quenching | 2.7 | 95 | bainite | 8 | 1121 | 67 | Example |
| 15 | 15 | 845 | oil quenching | 6.7 | 100 | - | 8 | 1102 | 66 | Reference Example |
| 16 | 16 | 1200 | oil quenching | 2.5 | 100 | - | 3 | 1045 | 15 | Comparative Example |
| 17 | 17 | 800 | oil quenching | 2.6 | 75 | bainite | 11 | 945 | 23 | Comparative Example |
| 18 | 18 | 845 | air cooling | 0.3 | 0 | bainite | 8 | 912 | 21 | Comparative Example |
| 19 | 19 | 845 | oil quenching | 2.7 | 100 | - | 8 | 1253 | 24 | Comparative Example |
| 20 | 20 | 845 | oil quenching | 2.7 | 95 | bainite | 8 | 1012 | 81 | Comparative Example |
| 21 | 21 | 845 | oil quenching | 2.7 | 100 | - | 8 | 1212 | 25 | Comparative Example |
| 22 | 22 | 845 | oil quenching | 2.7 | 77 | bainite | 8 | 953 | 23 | Comparative Example |
| 23 | 23 | 845 | oil quenching | 2.7 | 78 | retained austenite | 8 | 920 | 68 | Comparative Example |
| 24 | 24 | 845 | oil quenching | 2.7 | 72 | bainite | 8 | 938 | 27 | Comparative Example |
| 25 | 25 | 845 | oil quenching | 2.7 | 100 | - | 8 | 1097 | 22 | Comparative Example |
| 26 | 26 | 845 | oil quenching | 2.7 | 100 | - | 8 | 1108 | 25 | Comparative Example |
| 27 | 27 | 845 | oil quenching | 2.7 | 95 | bainite | 8 | 1082 | 20 | Comparative Example |
| 28 | 28 | 845 | oil quenching | 2.7 | 78 | bainite | 8 | 960 | 28 | Comparative Example |
| 29 | 29 | 845 | oil quenching | 2.7 | 78 | bainite | 8 | 937 | 29 | Comparative Example |
| 30 | 30 | 845 | oil quenching | 2.7 | 77 | bainite | 8 | 928 | 21 | Comparative Example |

In quenching, first, the radial center of the steel bar is heated to the heating temperature listed in Table 3, held at this temperature for 30 minutes, and then cooled using the cooling method and average cooling rate listed in Table 3. The oil used for oil quenching is high-speed quenching oil produced by Nippon Grease Co., Ltd. The oil temperature or water temperature during cooling was set to room temperature. Except for product No. 15 and product No. 18, the average cooling rate from 800 °C to 300 °C during cooling was set to 1.5 °C/s to 9.2 °C/s. For product No. 15 and product No. 18, the average cooling rates from 800 °C to 300 °C during cooling were set to 6.7 °C/s and 0.3 °C/s, respectively.

After the aforementioned quenching, the steel bar was heated until the radial center reached 540 °C, held at this temperature for 120 minutes, and then subjected to tempering by water cooling.

For sample Nos. 1 to 30 obtained through the above quenching and tempering, the samples were treated as the shaft of a bolt, and microstructure observation, prior y grain size measurement, a tensile test, and a Charpy impact test were conducted.

Microstructure observation was conducted on a cross-section perpendicular to the longitudinal direction of the sample. The cross-section was exposed by cutting the sample across the longitudinal direction. The aforementioned cross-section was corroded with 1 % nital solution and observed using an optical microscope.

The observation position was set within a rectangular area of 4 mm × 4 mm at the center (the center in the radial direction of the sample), where the cooling rate was the slowest and a martensitic microstructure was difficult to obtain. Three fields randomly selected at a magnification of 400 times were observed, and the distinction between tempered martensite and other microstructures was made through visual observation. Subsequently, based on this distinction result, the area ratio of the tempered martensitic microstructure was determined. The average value of the three fields was taken as the area ratio. Table 3 lists the area ratio of tempered martensite. In Table 3, for the samples with an area ratio of tempered martensitic microstructure less than 100 %, the observed microstructure other than a martensitic microstructure is indicated in the "microstructure other than tempered martensite" section.

The measurement of prior y grain size was conducted on a cross-section perpendicular to the longitudinal direction, similar to the microstructure observation. Using a picric acid aqueous solution, the prior y grain boundaries in the aforementioned cross-section were revealed and observed with an optical microscope. The observation position was set at a distance of d/4 outward from the center of the sample, with the diameter of the sample being d. The determination of grain size number was conducted based on JIS G 0551, through comparison with standard charts. Table 3 also illustrates the measurement results of prior y grain size.

The tensile test was conducted based on JIS Z 2241. The sampling position of the test piece for the tensile test was set at the aforementioned distance of d/4. The shape of the test piece was set to JIS No. 4 (with a diameter of 14 mm in the parallel portion). The test was conducted at a tensile speed of 3 mm/min. The tensile strength was calculated by dividing the maximum load indicated during the tensile test by the cross-sectional area of the test piece measured before the test.

To evaluate toughness, the Charpy impact test was conducted based on JIS Z 2242. The sampling position of the test piece for the Charpy impact test (a rectangular piece with a square cross-section of 10 mm on each side) was set to a position such that the position at the aforementioned distance of d/4 was the center position of the square cross-section of the test piece. The Charpy impact test piece was sampled in such a way that one face along the longitudinal direction of the test piece was perpendicular to the center of the sample in the radial direction (so that a perpendicular along the longitudinal direction of the test piece and extending from the face facing the center in the radial direction of the steel overlaps with the center of the sample). The notch shape of the Charpy impact test piece was set to 2 mm V (a V-shaped notch with a depth of 2 mm). The notch was applied to the face that was perpendicular to the center of the sample in the radial direction when the sample was taken. The Charpy impact test was conducted at -40 °C. The absorbed energy calculated by this Charpy impact test is also listed in Table 3.

Among the product Nos. 1 to 30 illustrated in Table 3, product Nos. 1 to 14 correspond to the Examples. Product Nos. 16 to 30 do not meet the requirements specified in the present embodiment and correspond to Comparative Examples. Product No. 15 is a Reference Example using a steel bar with a diameter of 40 mm as the material.

For use as a bolt, a tensile strength of 1040 MPa or more is sufficient (i.e., acceptable), and an absorbed energy of 27 J or more is also sufficient (i.e., acceptable).

As is clear from Table 3, the samples of product Nos. 1 to 14 have a tensile strength of 1040 MPa or more and an absorbed energy of 27 J or more, despite having a large diameter of 65 mm or more. Therefore, these products possess the necessary strength and toughness for bolts. Specifically, the samples of product Nos. 1 to 14 have tensile strength and absorbed energy equivalent to those of a bolt with a diameter corresponding to that of conventional technology, i.e., 40 mm, like the sample of product No. 15. Moreover, the samples of product Nos. 1 to 14 have significantly higher tensile strength and absorbed energy than the samples of product Nos. 15 to 30, which do not meet the requirements specified in the present embodiment.

In other words, it is effective to use steel bars with the aforementioned chemical composition and DI value to produce bolts that have high tensile strength and toughness. Furthermore, bolts using the aforementioned steel bars can meet the requirements for prior y grain size and the area ratio of tempered martensite, thereby achieving high tensile strength and toughness.

The configurations disclosed in the above embodiments (including other embodiments; the same applies below) can be applied in combination with the configurations disclosed in other embodiments, as long as no contradiction arises. Furthermore, the embodiments disclosed in the present specification are examples; the embodiments of the present disclosure are not limited thereto and may be modified as appropriate within a scope that does not depart from the purpose of the present disclosure.

### INDUSTRIAL APPLICABILITY

The present disclosure can be applied to a steel bar, a bolt, and a method of producing a bolt.

### REFERENCE SIGNS LIST

- 1: Steel bar
- 2: Bolt
- 21: Bolt head
- 22: Shaft
- S1: Steel bar production process
- S11: Rolling process
- S2: Intermediate process
- S21: Shipping process
- S22: Transportation process
- S23: Receiving process
- S3: Bolt forming process
- S31: Cutting process
- S32: Hot forging process
- S33: Thread rolling process
- S34: Quenching process
- S35: Tempering process

## Claims

1. A steel bar comprising a chemical composition containing, in mass%,
C: 0.35 % or more and 0.45 % or less,
Si: 0.10 % or more and 0.50 % or less,
Mn: 0.50 % or more and 2.00 % or less,
P: 0.030 % or less,
S: 0.030 % or less,
Ni: 1.00 % or more and 3.00 % or less,
Cr: 0.50 % or more and 2.00 % or less, and
Mo: 0.10 % or more and 0.50 % or less,
with the balance being Fe and impurities, wherein
a DI value expressed by Expression 1 is 420 or more, and
the steel bar has a diameter of 65 mm or more, DI = (-23.7 × [C]2 + 38.3 × [C] + 3.54) × (1 + 3.3 × [Mn]) × (1 + 0.7 × [Si]) × (1 + 2.16 × [Cr]) × (1 + 3 × [Mo]) × (1 + 0.36 × [Ni]) (1)
where [C], [Mn], [Si], [Cr], [Mo], and [Ni] represent a content of C, Mn, Si, Cr, Mo, and Ni, respectively, in mass%.

2. A bolt using the steel bar according to claim 1, wherein
the bolt comprises a shaft,
the shaft has a prior y grain size, in a cross-section perpendicular to a longitudinal direction, with a grain size number of 4 or more and 10 or less, and
in a microstructure of the cross-section, an area ratio of tempered martensite is 80 % or more.

3. A method of producing a bolt having a shaft and a bolt head by cutting the steel bar according to claim 1 and subjecting the steel bar after cutting to hot forging, thread rolling, quenching, and tempering, the method comprising:
forming the bolt head in the hot forging;
forming threads of the shaft in the thread rolling; and
setting, in the quenching, a heating temperature to be 820 °C or more and 1150 °C or less and an average cooling rate from 800 °C to 300 °C to be 0.5 °C/s or more.
